Europäisches Patentamt

European Patent Office

Office européen des brevets

(19)

(11) Numéro de publication: **0 014 183 B1**

(12) **FASCICULE DE BREVET EUROPEEN**

(45) Date de publication du fascicule du brevet: **17.11.82**

(51) Int. Cl.³: **B 60 J 1/20, B 60 J 3/00**

(21) Numéro de dépôt: **80830004.0**

(22) Date de dépôt: **21.01.80**

(54) **Dispositif d'aération et pare-soleil pour véhicule automobile.**

(30) Priorité: **23.01.79 IT 932579**

(43) Date de publication de la demande:
**06.08.80 Bulletin 80/16**

(45) Mention de la délivrance du brevet:
**17.11.82 Bulletin 82/46**

(84) Etats contractants désignés:
**AT BE CH DE FR GB LU NL SE**

(56) Documents cités:
**CH - A - 486 342**
**DE - A - 2 046 846**
**DE - U - 1 826 925**
**FR - A - 1 578 906**
**US - A - 3 025 098**

(73) Titulaire: **Alongi, Giuseppe**
**Lungarno Torrigiani 27**
**Firenze (IT)**

(73) Titulaire: **Alongi, Pasquale**
**Lungarno Torrigiani 27**
**Firenze (IT)**

(72) Inventeur: **Alongi, Giuseppe**
**Lungarno Torrigiani 27**
**Firenze (IT)**
Inventeur: **Alongi, Pasquale**
**Lungarno Torrigiani 27**
**Firenze (IT)**

(74) Mandataire: **Martini, Lazzaro**
**Ufficio Brevetti Ing. Lazzaro Martini Via**
**Brunelleschi, 1**
**I-50123 Firenze (IT)**

Courier Press, Leamington Spa, England.

# 0 014 183

## Dispositif d'aération et pare-soleil pour véhicule automobile

L'invention concerne un dispositif d'aération et pare-soleil pour véhicule automobile. Une lame verticale rigide en matériau pare-soleil, à placer à l'extrémité de la vitre descendante d'une des portières, elle est pourvue de plusieurs prises d'air en saillie vers l'intérieur de l'habitacle. Cellesci, par effet de mouvement du véhicule, permettent d'aspirer l'air de l'habitacle et d'y faire entrer l'air extérieur sans incommoder les passagers.

On sait que le changement d'air dans l'habitacle des véhicules automobiles est actuellement obtenu en abaissant une ou plusieurs vitres latérales, provoquant ainsi des courants d'air souvent gênants et nuisibles pour les occupants, surtout dans les véhicules dépourvus des déflecteurs. En outre le fait d'avoir la tête exposée au soleil même seulement latéralement crée, pour celui qui conduit, une gêne et un danger.

Il est connu par le modèle d'utilité allemand No 1 826 925 un dispositif d'aération pour véhicule automobile qui comprend une lame rigide qui est pourvue de prises d'air en saillie vers l'intérieur de l'habitacle et qui occupe la partie supérieure de la fenêtre de la portière laissée libre par la vitre descendante. Mais lesdites prises d'air, étant sur plusieures lignes horizontales étendues à toute ladite lame et les bouches de lesdites prises d'air étant orientées de côté ou vers le haut du véhicule, donnent lieu au passage incontrolé de l'air qui frappe les passagers assis derrière et en autre sont cause de sifflements continuels pendant la marche du véhicule.

En outre il est connu par le DE - A - 2 046 846 un dispositif d'aération pour véhicule automobile arrêté, occupant aussi toute la partie supérieure de la fenêtre de la portière laissée libre par la vitre descendante, qui est pourvu d'une seule prise d'air horizontale en saillie vers l'extérieur de l'habitacle et avec les bouches orientées vers le bas ou de côté du véhicule. Mais en cas de véhicule en mouvement, chaque bouche, en obligeant l'air de ventilation de sortir et même d'entrer dans l'habitacle, provoque une turbulence d'air bruyant et frappant les passagers assis derrière et en outre les bouches orientées de côté peuvent, en cas de pluie, laisser entrer l'eau dans l'habitacle.

Le but de l'invention en question est de proposer une solution à tous ces inconvénients. L'invention, telle qu'elle est decrite dans les revendications, résout le problème de la réalisation d'un dispositif d'aération et en même temps pare-soleil pour véhicule automobile.

Les avantages obtenus grâce à cette invention consistent essentiellement en ceci que la ventilation de l'habitacle est spontanée et continue, pendant la marche du véhicule; que l'air entre et sort de l'habitacle le long des parois sans incommoder les passagers; que éventuellement la quantité d'air de ventilation peut être réglée manuellement en fonction de la vitesse du véhicule et de la température ambiante; que le dispositif peut être réalisé en une ou plusieurs pièces obtenues par moulage du matériau transparent, mais d'une couleur apte à atténuer les rayons solaires; que l'application du dispositif est facile et n'entraîne pas de transformations de la carrosserie du véhicule, le dispositif est de longue durée et n'exige pas d'entretien.

L'invention sera maintenant décrite d'une façon plus détaillee grâce aux dessins annexés donnés dans le seul but de montrer une possibilité de réalisation.

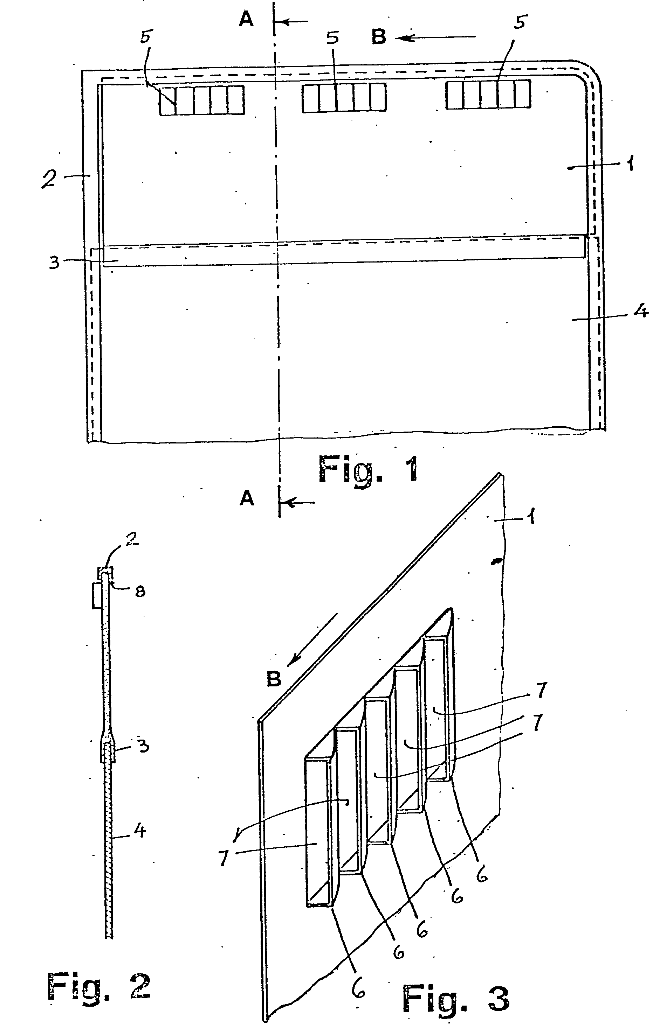

La figure 1 représente, de face, un dispositif conforme à l'invention appliqué sur la portière droite du véhicule automobile; la figure 2 raprésente la section selon A—A de la figure 1; la figure 3 raprésente le détail d'une prise d'air agrandie et en perspective.

Les figures représentent un dispositif d'aération et pare-soleil pour véhicule automobile. Il est constitué essentiellement d'une lame (1) mince mais rigide dont l'extrémité inférieure (3) est façonnée en canal afin d'être montée en baionnette par une pression légère sur le bord supérieur de la vitre (4) descendante d'une des portières (2); la hauteur de cette lame (1) doit être de préférence d'environ dix centimètres; sa longueur est de préférence égale ou un peu supérieure à la distance entre les montants de la portière, afin de permettre son montage sans entraîner des transformations sur la portière; son épaisseur est de préférence égal on un peu inférieure à celle de la vitre (4) afin de permettre que le bord horizontal supérieur et au moins un des bords verticaux de la lame (1) puissent être correctement insérés dans la rainure (8) de l'encadrement de la portière (2) au moment où la lame (1) est installée sur la vitre (4) et celle-ci poussée vers le haut autant que possible. La vitre restant fixe (4), la lame (1) est prête à l'usage. En outre la lame (1) est pourvue — à proximité de son bord supérieur — de trois prises d'air (5) en saillie vers l'intérieur du véhicule, chacune de celles-ci est constituée de plusieurs manches (6), au nombre de cinq par exemple, alignées et dont la bouche (7) est orientée vers la partie avant du véhicule, de sorte que l'air de l'habitacle, par le mouvement selon la flèche B, est aspiré et refoulé vers l'extérieur au moins à travers la prise d'air, (5) se trouvant plus près du tableau de bord; alors que l'air extérieur est poussé dans l'habitacle à travers la prise d'air (5) la plus éloignée.

## Revendications

1. Dispositif d'aération pour véhicule automobile avec une lame rigide pourvue de prises d'air en saillie vers l'intérieur de l'habitacle et qui occupe la partie supérieure de la fenêtre de la portière laissée libre par la vitre descendante caractérisé par le fait que chaque prise d'air (5) est constituée de plusieurs

2

**0014183**

manches (6) avec des bouches (7) orientées vers la partie avant du véhicule et que la lame (1) est en matériau pare-soleil.

2. Dispositif selon la revendication 1 caractérisé par le fait que lesdites prises d'air (5) sont horizontalement alignées mais toutes de même hauteur qui est inférieure à celle de la lame (1).

**Patentansprüche**

1. Belueftungsvorrichtung fuer ein kraftfahrzeug mit einer starren platte, die mit luftzufuehrungen versehen ist, welche in das innere des fuehrerraums hinein vorspringen, und die den oberen teil des fensters der wagentuer einnimmt, der von der sich senkenden scheibe freigelassen wird, dadurch gekennzeichnet, dass jede luftzuehrung (5) von mehreren rohren (6) mit muendungsoeffnungen (7) gebildet ist, die zum vorderteil des fahrzeuges hin ausgerichtet sind, un dass die platte (1) aus einen sonnenblendenmaterial besteht.

2. Vorrichtung nach anspruch 1, dadurch gekennzeichnet, dass die luftzufuehrungen (5) horizontal ausgerichtet sind, jedoch alle dieselbe hoehe besitzen, die kleiner als die hoehe der platte (1) ist.

**Claims**

1. A ventilation device for a motor vehicle, the device having a rigid strip having air intakes proselting towards the inside of the passenger compartment, the strip taking up the top part of the door window left free by the descending pane, characterised in that each air intake (5) comprises a number of sleeves (6) with mouths (7) extending towards the front part of the vehicle, and the strip (1) is made of a sun visor material.

2. A device according to Claim 1 characterised in that the air intakes (5) are aligned horizontally but are all of the same height, the same being less than the height of the strip (1).

**0 014 183**

Fig. 1

Fig. 2

Fig. 3